(19) Europäisches Patentamt
European Patent Office
Office européen des brevets

(11) Publication number: **0 078 146**
**B1**

(12) **EUROPEAN PATENT SPECIFICATION**

(45) Date of publication of patent specification: **02.04.86**

(51) Int. Cl.[4]: **A 01 N 25/22,** A 01 N 47/12, A 01 N 25/32

(21) Application number: **82305574.4**

(22) Date of filing: **20.10.82**

(54) **Substituted amines and amine salts as herbicide extenders.**

(30) Priority: **23.10.81 US 313984**
**21.05.82 US 380586**

(43) Date of publication of application:
**04.05.83 Bulletin 83/18**

(45) Publication of the grant of the patent:
**02.04.86 Bulletin 86/14**

(84) Designated Contracting States:
**AT BE CH DE FR GB IT LI NL**

(56) References cited:
**EP-A-0 010 178**
**EP-A-0 038 945**
**US-A-3 564 768**
**US-A-3 959 304**

**CHEMICAL ABSTRACTS, vol. 85, no. 5, 2nd August 1976, page 117, no. 29568g, Columbus, Ohio, USA**

**P.C. Kearney; Herbicides, Vol. 1, p. 335-339**

**The file contains technical information submitted after the application was filed and not included in this specification**

(73) Proprietor: **STAUFFER CHEMICAL COMPANY**
**Westport Connecticut 06880 (US)**

(72) Inventor: **Felix, Raymond A.**
**1662 Shasta Street**
**Richmond California (US)**
Inventor: **Hsu, Joanna K.**
**1619-C Belleville Way**
**Sunnyvale California (US)**
Inventor: **Hyzak, Daniel L.**
**1309 Arronimink Circle**
**Austin Texas (US)**

(74) Representative: **Smith, Sydney et al**
**Elkington and Fife High Holborn House**
**52/54 High Holborn**
**London WC1V 6SH (GB)**

(56) References cited:

**M. Dekker, N.Y. Wegler Chemie der Pflanzenschutz. und Schadlungsbekämpfungsmittel, Band 2, p. 71-72**

**EP 0 078 146 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to substituted amines and amine salts as herbicide extenders also to corresponding compositions and methods. More particularly, the present invention addresses the problem of herbicidal degradation occurring in certain soils.

As a generality, thiolcarbamate herbicides have been used in combination with some amines, see, for example, CA: *85,* 29568 g. Some amines have fungicidal and bactericidal activity, see, for example, Wegler: Chemie der Pflanzenschutz- und Schadlings—bekampfungsmittel, Band 2, p. 71, 72. A general discussion of herbicide stability in soil may be found in Kearney, Herbicides, Vol. 1, Dekker, p. 335—339.

Thiolcarbamates are well known in the agricultural art as herbicides useful for weed control in crops, such as corn, potatoes, beans, beets, spinach, tobacco, tomatoes, alfalfa and rice. Thiolcarbamates are primarily used in pre-emergence application and are particularly effective when incorporated into the soil prior to the planting of the crop. The concentration of the thiolcarbamate in the soil is greatest immediately after application of the compound. How long thereafter the initial concentration is retained depends in large part on the particular soil used. In many soils the thiolcarbamate concentration declines rapidly in a matter of a few days or weeks due to chemical transformation or degradation of the thiolcarbamate into a less active compound. This is evident both in measurements of the quantity of undegraded thiolcarbamate remaining in the soil after specified time intervals have elapsed.

It is therefore an object of the present invention to increase the soil persistence of thiolcarbamate herbicides and thus improve the herbicidal effectiveness.

It has now been discovered that the soil persistence of certain herbicidally-active thiolcarbamates is significantly extended by the further addition to the soil of certain extender compounds in the form of substituted amines or agriculturally-acceptable salts thereof, which have little or no herbicidal activity of their own and do not decrease the herbicidal activity of the thiolcarbamate. This improvement in the soil persistence of thiolcarbamates manifests itself in a variety of ways. It can be shown, for example, by soil analyses taken at regular intervals, that the rate of decrease of the thiolcarbamate content of the soil is substantially lessened. Improved soil persistence can also be shown by improvements in herbicidal efficacy, as evidenced by a higher degree of weed injury brought about when the extender compound increases the soil persistence of the thiolcarbamate, prolonging its effective life.

The present invention provides a process for the production of a herbicidal composition of extended soil life characterised in that it comprises mixing:

(a) a herbicidally-effective amount of a thiolcarbamate corresponding to the following general formula:

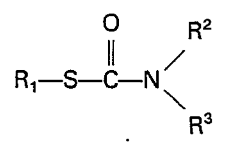

wherein $R^1$, $R^2$ and $R^3$ independently represent $C_2$—$C_4$ alkyl; and

(b) an amount sufficient to extend the soil life of the thiolcarbamate of an amine or an agriculturally-acceptable salt thereof, the amine corresponding to the following general formula:

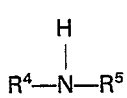

wherein

$R^4$ represents $C_1$—$C_{10}$ alkyl optionally substituted with cyano; $C_3$—$C_6$ alkenyl; $C_1$—$C_{10}$ hydroxyalkyl, phenyl or benzyl optionally substituted with halogen, cyano or methoxy and

$R^5$ represents $C_3$—$C_6$ alkenyl; provided that, when $R^5$ represents allyl, $R^4$ represents other than *o*-bromobenzyl or α-cyano-*o*-chlorobenzyl.

The present compositions may be obtained by mixing the components.

In the thiolcarbamate formula, $R^1$ is preferably ethyl, and $R^2$ and $R^3$ are each preferably propyl.

In certain preferred embodiments, the amine is a diallylamine, N-ethyl-N-allylamine, N-propyl-N-allylamine, diallylamine hydrochloride or N-isopentyl-N-allyamine.

An "agriculturally acceptable salt" includes the salt formed from any suitable proton donor (acid). For example, the salt may be a hydrohalide salt of an amine, and, more particularly, the salt formed from hydrochloric acid.

This invention further relates to a method of controlling undesirable vegetation comprising applying the above compositions optionally as components to the locus when control is desired.

The terms "alkyl" and "alkenyl" are used herein to include both straight-chain and branched-chain groups. All carbon atom ranges are inclusive of their upper and lower limits.

The term "halogen" refers to fluorine, chlorine, bromine, and iodine. Of these, chlorine and bromine are preferred, and chlorine is particularly preferred.

The term "herbicide", as used herein, means a compound or composition which controls or modifies the growth of plants. By the term "Herbicidally effective amount" is meant any amount of such compound or composition which causes a modifying effect upon the growth of plants. By "plants" is meant germinant seeds, emerging seedlings, and established vegetation, including roots and above-ground portions. Such controlling or modifying effects include all deviations from natural development, such as killing, retardation, defoliation, desiccation, regulation, stunting, tillering, stimulation, leaf burn and dwarfing.

The phrase "to extend the soil life of said thiolcarbamate" as used herein means to retard the rate at which molecules of thiolcarbamate are broken down into decomposition products when in contact with soil and/or to prolong the period of time following application in which herbicidal effects can be observed. This applies both to field sites where repeated applications of thiolcarbamates result in decreasing herbicidal effectiveness, and to field sites where a decline in herbicidal activity is detected over time regardless of the prior history of herbicidal applications. An extended soil life can be demonstrated by a slower rate of decline of weed-killing activity, or an increased half-life of thiolcarbamate concentration in the soil. Other techniques of determining soil life are readily apparent to one skilled in the art.

## Detailed Description of the Invention

Thiolcarbamates within the scope of the present invention can be prepared by the process described in U.S.—A—2,913,327 (Tilles et al., Nov. 17, 1959). Examples of such thiolcarbamates include S-ethyl N,N-di-n-propylthiolcarbamate, S-ethyl N,N-diisobutylthiolcarbamate, S-n-propyl N,N-di-n-propylthiolcarbamate, and S-n-propyl N-ethyl-N-n-butylthiolcarbamate.

The extender compounds of the present invention can be prepared by a variety of known techniques. Included among these are the following:

The reaction between a primary amine and an aldehyde or ketone will yield an imine and water. After the imine is recovered by phase separation, it is reduced with either sodium borohydride or sodium cyanoborohydride to yield a secondary amine. Amines with alkyl, alkenyl and benzyl groups can be produced by this method.

In a similar reaction scheme, an acid chloride is used as the starting material rather than the aldehyde or ketone. A stronger reducing agent, lithium aluminium hydride for example, will then be needed to reduce the intermediate, which will be an amide.

The nitrogen atom on the amide intermediate can alternatively be fully alkylated by treating the amide with an alkyl bromide in the presence of a strong base. Hydrolysis with a caustic solution will then remove the acid moiety to render a secondary amine. Phenyl substitutions can be achieved in this manner.

Primary amines can also be directly alkylated with an alkyl or benzylchloride. Further alkylation will produce a tertiary amine.

α-Cyanoalkyl (or -benzyl) amines can be produced from a primary amine by reacting the latter with a cyanohydrin.

Many of these compounds and all of the starting materials are commercially available.

The objects of the present invention are achieved by applying the extender compound to the soil at an agricultural field site in conjunction with the herbicide. The two compounds can be applied simultaneously in a single mixture or in separate formulations, or they can be applied in succession, with either one following the other. In successive application, it is preferable to add the compounds as close in time as possible.

The herbicide extending effect is operable over a wide range of ratios of the two compounds. It is most convenient, however, to apply the compound at a ratio of 0.2:1 to 20:1 (herbicide: extender) on a weight basis, preferably 0.5:1 to 5:1, and most preferably 0.5:1 to 2:1.

The variety of crops on which the present composition is useful can be significantly broadened by the use of an antidote to protect the crop from injury and render the composition more selective against weeds.

Antidote descriptions and methods of use are found in U.S.—A— 3,959,304, issued to E. G. Teach on May 25, 1976; U.S.—A—3,989,503, issued to F. M. Pallos et al. on November 2, 1976; U.S.—A—4,021,224, issued to F. M. Pallos et al. on May 3, 1977; U.S.—A—2,131,509, issued to O. L. Hoffman on May 5, 1964; and U.S.—A—3,564,768, issued to O. L. Hoffman on February 3, 1971. The disclosures of these patents are incorporated herein by reference.

Useful antidotes include acetamides having the formula

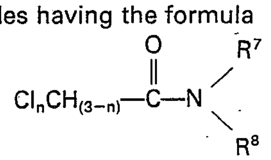

in which n is 1 or 2, and $R^7$ and $R^8$ are independently $C_1$—$C_{12}$ alkyl or $C_2$—$C_{12}$ alkenyl. Examples falling within the above formula are N,N-di-allyl dichloroacetamide and N,N-diallyl chloracetamide.

Further useful antidotes are oxazolidines and thiazolidines having the formula

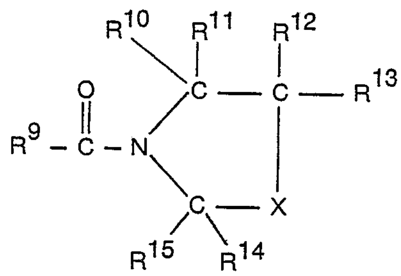

in which $R^9$ is $C_1$—$C_4$ alkyl, haloalkyl, or dihaloalkyl, $R^{10}$ through $R^{15}$ are independently hydrogen or methyl, and X is oxygen or sulfur. An example of such an antidote is 2,2,5-trimethyl-N-dichloroacetyl oxazolidine ($R^9 = CHCl_2$, $R^{10} = R^{11} = R^{12} = R^{13} = R^{14} = R^{15} = CH_3$, X = O).

A still further useful antidote is 1,8-naphthalic anhydride.

The antidote is applied in conjunction with the thiolcarbamate and the extender compound in a nonphytotoxic antidotally effective amount. By "non-phytotoxic" is meant an amount of the antidote which causes at most minor injury to the desired crop species. By "antidotally effective" is meant an amount of the antidote which substantially decreases the extent of injury caused by the thiolcarbamate to the desired crop species. The preferred ratio of herbicide to antidote is from 0.1:1 to 30:1. The most preferred range is from 3:1 to 20:1.

The following examples are offered to illustrate the extended soil life of the herbicides in the present compositions and to show the improvement in herbicidal activity which results from their use. These examples are not intended to limit or define the invention in any manner.

Example 1

Herbicidal Activity Improvement Tests

This example offers herbicidal activity test data to show the effectiveness of the extender compounds in improving the herbicidal activity of thiolcarbamates. The effect is observed by comparing the extent of weed control in test flats treated with a thiolcarbamate against that occurring in similar flats treated with both the thiolcarbamate and the extender. The soil used in these tests was a sandy loam soil from Keeton, California, which was pre-treated with the herbicide to simulate a typical field which had received previous herbicide ammplications.

A. *Soil Pre-Treatment*

A solution was prepared by diluting an emulsifiable liquid concentrate containing 6 lb/gal (0.72 kg/l) (76.8% by weight) of the herbicide S-ethyl di-n-propylthiolcarbamate in 200 ml of water, such that the resulting concentration of herbicide in the solution was 2000 mg/l. Two hundred ml of this solution was then added to 200 lb (90.8 kg) of soil and the mixture was mixed in a rotary mixer for thirty minutes.

The soil was then placed in round plastic containers, 7.5 inches (19.0 cm) in diameter by 7.5 inches (19.0 cm) deep. The soil was tamped and leveled with a row marker to impress three rows across the width of each container. One row was seeded with DeKalb XL—45A corn (*Zea mays*), and two rows were seeded with barnyardgrass (*Echinochloa crusgalli*). Sufficient seeds were planted to produce several seedlings per row. The containers were then placed in a greenhouse maintained at 20°C to 30°C and watered daily by sprinkler.

Five weeks after treatment, the soil was allowed to dry out and the plant foliage was removed. The soil was then passed through a 0.25 inch (0.64 cm) screen to remove plant roots and clods, and then passed through a 2 millimeter (mm) screen.

B. *Herbicide Test*

The same thiolcarbamate preparation described in Part A was used. The extender compounds were used in technical form. These materials were added to 100 ml mixtures of equal parts of water and acetone at such amounts that 5 ml of the resulting mixture when added to three pounds (1.35 kg) of soil yielded a quantity in the soil equivalent to the desired application rate expressed in pounds per acre (kg/ha). Thus, 5 ml of the mixture and three pounds (1.35 kg) of soil were placed in a rotary mixer. Also added was 17—17—17 fertilizer ($N$—$P_2O_5$—$K_2O$ on a weight basis), amounting to 50 ppm by weight with respect to the soil.

The treated soil was then placed in aluminium flats which were 3 inches deep, 4 inches wide, and 8 inches long (7.6 × 10.2 × 20.3 cm). The soil was tamped and levelled with a row marker to impress six rows across the width of the flat. The test weeds were as follows:

| COMMON NAME | SCIENTIFIC NAME |
|---|---|
| watergrass | *Echinochloa crusgalli* (L.) |
| milo | *Sorghum bicolor* (L.) Moench |
| wild oats | *Avena fatua* (L.) |
| wild cane | *Sorghum bicolor* (L.) Moench |
| yellow foxtail | *Setaria lutescens* (Weigle) Hubb. |

DeKalb XL—45A corn of species *Zea mays* (L.) was also planted.

Sufficient seeds were planted to produce several seedlings per inch in each row. The flats were then placed in a greenhouse maintained at 70 to 85°F (21 to 30°C) and watered daily by sprinkler.

Approximately three weeks after treatment, the degree of weed control and corn injury were estimated and recorded as percentage control compared to the growth of the same species in an untreated check flat of the same age. The rating scale ranges from 0 to 100%, where 0 equals no effect with plant growth equal to the untreated control, and 100 equals complete kill.

The results are listed in Tables I, II, III, and IV, each representing a separate batch of tests. Control experiments (with no extender present) were included in each batch for comparison. Substantial improvements in average percent weed control over the control experiments are evident. The herbicidal efficacy of the thiolcarbamate three weeks after application was much improved by the use of the extender, whereas the corn remained unaffected.

TABLE I

HERBICIDE TEST RESULTS

HERBICIDE: S-Ethyl N,N-di-n-propylthiolcarbamate (EPTC) at 3 lb/A (3.35 kg/ha)

EXTENDER: As shown, at application rate shown

EVALUATION TIME: Nineteen days after treatment

| | | Percent Injury | | | | | |
|---|---|---|---|---|---|---|---|
| Extender | Rate (lb/A) | Water-grass | Milo | Wild Oats | Wild cane | Fox-tail | Corn |
| CONTROL DATA (average of two) | — | 5 | 0 | 0 | 0 | 0 | 0 |
| TEST DATA | | | | | | | |
| $HN(allyl)_2$ | 2(2.25 kg/ha) | 85 | 95 | 90 | 90 | 80 | 0 |
| | 4(4.5 kg/ha) | 85 | 90 | 90 | 85 | 80 | 0 |
| $HN(allyl)_2.HCl$ | 2 | 85 | 95 | 90 | 90 | 85 | 0 |
| | 4 | 90 | 95 | 95 | 90 | 80 | 0 |

TABLE II

HERBICIDE TEST RESULTS

HERBICIDE; S-Ethyl N,N-di-n-propylthiolcarbamate (EPTC) at 3 lb/A (3.35 Kg/ha)

EXTENDER: As shown at 4 lb/A (4.5 kg/ha)

EVALUATION TIME: Eighteen days after treatment

| | Percent Injury | | | | | |
|---|---|---|---|---|---|---|
| Extender | Water grass | Milo | Wild Oats | Wild cane | Fox-tail | Corn |
| CONTROL DATA (average of two) | 20 | 5 | 0 | 0 | 0 | 0 |
| TEST DATA | | | | | | |
| $N{\equiv}CCH_2NH$(allyl) | 55 | 0 | 35 | 0 | 30 | 0 |
| i-$C_5H_{11}NH$(allyl) | 50 | 30 | 70 | 10 | 20 | 0 |
| n-$C_3H_7NH$(allyl) | 95 | 95 | 95 | 95 | 95 | 85 |
| i-$C_4H_9NH$(allyl)·HCl | 65 | 40 | 55 | 40 | 75 | 0 |
| $C_2H_5NH$(allyl) | 95 | 95 | 100 | 95 | 90 | 90 |
| 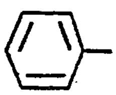 NH(allyl) | 40 | 10 | 45 | 0 | 15 | 0 |

TABLE III

HERBICIDE TEST RESULTS

HERBICIDE: S-Ethyl N,N-di-n-propylthiolcarbamate (EPTC) at 3 lb/A (3.35 kg/ha)

EXTENDER: As shown, at 4 lb/A (4.5 kg/ha)

EVALUATION TIME: Twenty-one days after treatment

| | Percent Injury | | | | | |
|---|---|---|---|---|---|---|
| Extender | Water-grass | Milo | Wild Oats | Wild cane | Fox-tail | Corn |
| CONTROL DATA (average of two) | 10 | 0 | 0 | 0 | 0 | 0 |
| TEST DATA: | | | | | | |
| 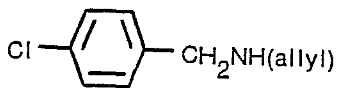 | 30 | 30 | 20 | 0 | 0 | 0 |
| 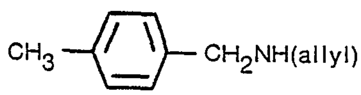 | 20 | 10 | 30 | 10 | 0 | 0 |
| 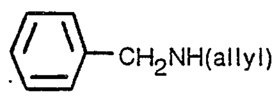 | 45 | 70 | 60 | 25 | 50 | 0 |
| 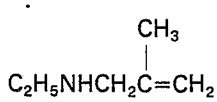 | 75 | 90 | 75 | 60 | 60 | 0 |

TABLE IV

HERBICIDE TEST RESULTS

HERBICIDE: S-Ethyl N,N-di-n-propylthiolcarbamate (EPTC) at 3 lb/A (3.35 kg/ha)

EXTENDER: As shown, at 4 lb/A (4.5 kg/ha)

EVALUATION TIME: Eighteen days after treatment

| Extender | Water-grass | Milo | Wild Oats | Wild cane | Fox-tail | Corn |
|---|---|---|---|---|---|---|
| CONTROL DATA (average of two) | 22 | 35 | 38 | 0 | 0 | 0 |
| TEST DATA: | | | | | | |
| 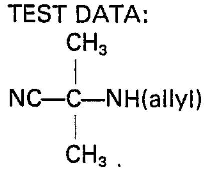 | 70 | 85 | 75 | 10 | 15 | 0 |
| 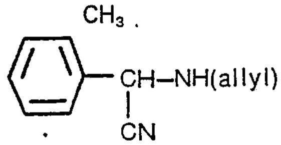 | 75 | 90 | 85 | 0 | 0 | 0 |

Example 2

This example shows, by soil analysis, the effectiveness of the extender compounds of the present invention in extending the soil life of thiolcarbamates. The thiolcarbamate preparation described in Example 1 was used, and the soil was a silty loam from Mississippi.

A. *Soil Pre-Treatment*

As in Example 1, the soil was pre-treated with the herbicide to simulate a typical field with a history of herbicide treatment. The procedure was identical to that described in part A of Example 1.

B. *Soil Persistence Test*

A 100-gram quantity (air-dry basis) of the pre-treated soil was placed in an 8-ounce (0.25 liter) wide-mouth glass bottle. The emulsifiable concentrate described in Part A above was appropriately diluted in water such that a 5-ml portion added to the soil would produce a herbicide concentration of 6 ppm (weight) in the soil. This is equivalent to an application rate of 6 pounds per acre (6.7 kilograms per hectare) in a field where the herbicide is incorporated into the soil through a depth of about 2 inches (5.08 cm) soon after application. A selected extender compound in technical (nonformulated) form was then diluted in an acetone-water mixture such that a one-ml portion added to the soil would produce a concentration of 4 ppm by weight, equivalent to 4 pounds per acre (4.5 kilograms per hectare). On these bases, the herbicide and extender were added to the bottle containing the soil.

Following such treatment, the soil was moistened with 20 ml of deionized water. The bottle was then covered with a watch glass to maintain aerobic conditions and to prevent rapid soil drying, and placed in a controlled environmental chamber in darkness, where the temperature was maintained constant at 25°C.

Four days later, the bottle was removed from the environmental chamber and 25 ml of water and 100 ml of toluene were added. The bottle was then tightly sealed with a lid containing four-layer cellophane liners, and vigorously shaken on a variable speed, reciprocating shaker (Eberbach Corp. Model 6000) set at approximately 150 excursions per minute for ninety minutes. After shaking, the bottle contents were allowed to settle, and a 10 ml aliquot of toluene was transferred by pipette into a glass vial and sealed with a polyseal cap. The toluene extract was analyzed for herbicidal content by gas chromatography. The chromatogram data was then converted to equivalent soil concentrations in parts per million (ppm) by weight of the herbicide.

The results are shown in the tables below. Control runs without an extender compound were conducted for comparison, so show how the drop in herbicide concentration was affected by the extender compound. In each case, the quantity of herbicide remaining in the soil after four days was dramatically increased when the extender compound was added.

TABLE V

SOIL PERSISTENCE TEST RESULTS

HERBICIDE: S-Ethyl N,N-di-n-propylthiolcarbamate (EPTC) soil (6 lb/A (6.7 kg/ha)

EXTENDER: As shown, at 4 ppm in soil (4 lb/A) (4.5 kg/ha)

EVALUATION TIME: Four days after treatment

| Extender | EPTC Residue (ppm) After 4 Days: With Extender | EPTC Residue (ppm) After 4 Days: Without Extender |
|---|---|---|
| $HN(allyl)_2$ | 1.93 | 0.03 |

TABLE VI

SOIL PERSISTENCE TEST RESULTS

HERBICIDE: S-Ethyl N,N-di-n-propylthiolcarbamate (EPTC) at 6 ppm in soil (6 lb/A (6.7 kg/ha)

EXTENDER: As shown, at 4 ppm in soil (4 lb/A) (4.5 kg/ha)

EVALUATION TIME: Four days after treatment

| | EPTC Residue (ppm) After 4 Days | |
|---|---|---|
| Extender | With Extender | Without Extender* |
| $N{\equiv}CCH_2NH$(allyl) | 1.62 | 0.06 |
| i-$C_5H_{11}NH$(allyl) | 1.21 | 0.06 |
| n-$C_3H_7NH$(allyl) | 1.82 | 0.06 |
| i-$C_4H_9NH$(allyl)·HCl | 3.06 | 0.06 |
| $C_2H_5NH$(allyl) | 2.71 | 0.06 |
| NH(allyl)$_2$·HCl | 3.32 | 0.06 |
| 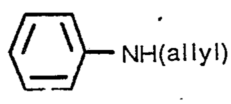 | 4.19 | 0.06 |
| 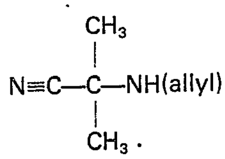 | 3.01 | 0.06 |
| 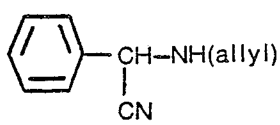 | 2.49 | 0.06 |
| 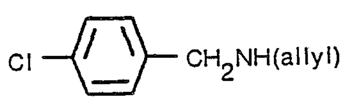 | 1.16 | 0.06 |
| 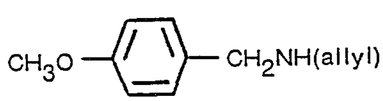 | 2.06 | 0.06 |
| 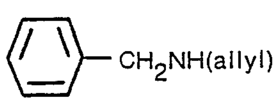 | 1.66 | 0.06 |
| 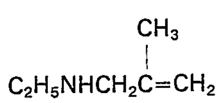 | 1.72 | 0.06 |

* Average over three runs.

Methods of Application

The herbicidal compositions of the present invention are useful in controlling the growth of undesirable vegetation by preemergence or post-emergence application to the locus where control is desired, including pre-plant and post-plant soil incorporation as well as surface application. The compositions are generally embodied in formulations suitable for convenient application, containing additional ingredients, diluents or carriers to aid in their dispersal. Examples of such ingredients or carriers are water, organic solvents, dusts, granules, surface active agents, water-oil emulsions, wetting agents, dispersing agents, and emulsifying agents. The formulated compositions generally take the form of dusts, emulsifiable concentrates, granules, or microcapsules.

A. Dusts.

Dusts are dense powder compositions which combine the active compounds with a dense, free-flowing solid carrier. They are intended for application in dry form and are designed to settle rapidly to avoid being windborne to areas where their presence is not desired.

The carrier may be of mineral or vegetable origin, and is preferably an organic or inorganic powder of high bulk density, low surface area, and low liquid absorptivity. Suitable carriers include micaceous talcs, pyrophyllite, dense kaolin clays, tobacco dust, and ground calcium phosphate rock.

The performance of a dust is sometimes aided by the inclusion of a liquid or solid wetting agent, of ionic, anionic, or nonionic character. Preferred wetting agents include alkylbenzene and alkylnaphthalene sulfonates, sulfated fatty alcohols, amines or acid amides, long chain acid esters of sodium isothionate, esters of sodium sulfosuccinate, sulfated or sulfonated fatty acid esters, petroleum sulfonates, sulfonated vegetable oils, and ditertiary acetylenic glycols. Dispersants are also useful in the some dust compositions. Typical dispersants include methyl cellulose, polyvinyl alcohol, lignin sulfonates, polymeric alkylnaphthalene sulfonates, sodium naphthalene sulfonate, polymethylene bisnaphthalenesulfonate, and sodium-N-methyl-N-(long chain acid) taurates.

In addition, inert absorptive grinding aids are frequently included in dust conpositions to aid in the manufacturing of the dust. Suitable grinding aids include attapulgite clay, diatomaceous silica, synthetic fine silica and synthetic calcium and magnesium silicates.

In typical dust compositions, carriers are usually present in concentrations of from about 30 to 90 weight percent of the total composition. The grinding aid usually constitutes about 5 to 50 weight percent, and the wetting agent up to about 1.0 weight percent. Dispersants, when present, constitute up to about 0.5 weight percent, and minor amounts of anticaking and antistatic agents may also be present. The particle size of the entire composition is usually about 30 to 50 µm ($10^{-6}$m).

B. Emulsifiable Concentrates

Emulsifiable concentrates are solutions in which the active materials and an emulsifying agent are dissolved in a nonwatermiscible solvent. Prior to use, the concentrate is diluted with water to form a suspended emulsion of solvent droplets.

Typical solvents for use in emulsifiable concentrates include weed oils, chlorinated hydrocarbons, and nonwatermiscible ethers, esters, and ketones.

Typical emulsifying agents are anionic or nonionic surfactants, or mixtures of the two. Examples include long-chain mercaptan pollethoxy alcohols, alkylaryl polyethoxy alcohols, sorbitan fatty acid esters, polyoxyethylene ethers with sorbitan fatty esters, polyoxyethylene glycol esters with fatty or rosin acids, fatty alkyol amide condensates, calcium and amine salts of fatty alcohol sulfates, oil soluble petroleum sulfonates, or preferably mixtures of these emulsifying agents. Such emulsifying agents usually comprise about 1 to 10 weight percent of the total composition.

Typical emulsifiable concentrates contain about 15 to 50 weight percent active material, about 40 to 82 weight percent solvent, and about 1 to 10 weight percent emulsifier. Other additives such as spreading agents and stickers can also be included.

C. Granules

Granules are physically stable, particulate compositions in which the active ingredients adhere to or are distributed throughout a basic matrix of a coherent, inert carrier with macroscopic dimensions. A typical particle is about 1 to 2 millimeters in diameter. Surfactants are often present to aid in the leaching of the active ingredient from the granule to the surrounding medium.

The carrier is preferably of mineral origin, and generally falls within one of two types. The first are porous, absorptive, preformed granules, such as attapulgite or heat expanded vermiculite. A solution of the active agent is sprayed on the granule at concentrations of up to 25 weight percent of the total weight. The second are powdered materials to which the active ingredients are added prior to being formed into granules. These materials include kaolin clays, hydrated attapulgite, or bentonite clays in the form of sodium, calcium, or magnesium bentonites. Water-soluble salts may also be present to help the granules disintegrate in water. These ingredients are blended with the active components, then granulated or

pelleted, followed by drying. In the resulting composition, the active component is distributed uniformly throughout the mass. Granules can be made with as much as 25 to 30 weight percent active component, but more frequently a concentration of about 10 weight percent is desired for optimum distribution. Granule compositions are most useful in a size range of 15—30 mesh.

The surfactant is generally a common wetting agent of anionic or nonionic character. The most suitable wetting agents depend upon the type of granule used. When preformed granules are sprayed with active material in liquid form, the most suitable wetting agents are nonionic, liquid wetters miscible with the solvent. These are compounds generally known as emulsifiers, and comprise alkylaryl polyether alcohols, alkyl polyether alcohols, polyoxyethylene sorbitan fatty acid esters, polyethylene glycol esters with fatty or rosin acids, fatty alkylol amide condensates, oil solution petroleum or vegetable oil sulfonates, or mixtures of these. Such agents usually comprise up to about 5 weight percent of the total composition.

When the active ingredient is first mixed with a powdered carrier and subsequently granulated, liquid nonionic wetters can still be used, but it is usually preferable to incorporate at the mixing stage a solid, powdered anionic wetting agent comprising up to about 2.0 weight percent of the total composition.

Typical granules comprise about 5 to 30 percent by weight active material, about 0 to 5 weight percent wetting agent, and about 65 to 95 weight percent carrier.

D. Microcapsules

Microcapsules are fully enclosed droplets or granules in which the active materials are enclosed in an inert porous membrane which allows the enclosed materials to escape to the surrounding medium at controlled rates.

Encapsulated droplets are typically about 1 to 50 μm ($10^{-6}$m) in diameter. The enclosed liquid typically constitutes about 50 to 95% of the weight of the capsule, and may contain a small amount of solvent in addition to the active materials.

Encapsulated granules are characterized by porous membranes sealing the openings of the granule carrier pores, trapping the liquid containing the active components inside for controlled release. A typical granule size ranges from 1 millimeter to 1 centimeter in diameter. Granules formed by extrusion, agglomeration, or prilling are useful in the present invention as well as materials in their naturally occurring form. Examples of such carriers are vermiculite, sintered clay granules, kaolin, attapulgite clay, sawdust, and granular carbon.

Useful encapsulating materials include natural and synthetic rubbers, cellulosic materials, styrenebutadiene copolymers, polyacrylonnitriles, polyacrylates, polyesters, polyamides, polyurethanes, and starch xanthates.

E. In General

Each of the above formulations can be prepared as a package containing both the herbicide and the extender together with the other ingredients of the formulation (diluents, emulsifiers, surfactants, etc.), or as a tank mix in which the components are formulated separately and combined at the grower site. The two formulations in the tank mix can be of either the same type or two different types—e.g., the herbicide in microcapsule form and the extender as an emulsifiable concentrate. As a further alternative, the herbicide and extender can be applied sequentially. This is less preferred, however, since simultaneous application generally produces better results.

In general, any conventional method of application can be used. The locus of application can be soil, seeds, seedlings, or the actual plants, as well as flooded fields. Soil application is preferred. Dusts and liquid compositions can be applied by the use of powder dusters, boom and hand sprayers, and spray dusters. The compositions can also be applied from airplanes as dusts and sprays because they are effective in very low dosages. In order to modify or control the growth of germinating seeds or emerging seedlings, as a typical example, the dust and liquid compositions are applied to the soil according to conventional methods and are distributed to a depth of at least one-half inch below the soil surface. The compositions can either be mixed with the soil particles by discing, dragging, or mixing operations, or sprayed or sprinkled over the surface of the soil. The compositions can also be added to irrigation water so that they will accompany the water as it penetrates the soil.

The amount of active ingredient required for herbicidal effectiveness depends upon the nature of the seeds or plants to be controlled and the prevailing conditions. Usually, herbicidal effects are obtained with an application rate of 0.01 to 50 pounds per acre (0.01 to 56 kg/ha), preferably 0.1 to 25 (0.1 to 28). It will be readily apparent to one skilled in the art that compositions exhibiting lower herbicidal activity will require a higher dosage than more active compounds for the same degree of control.

**Claims for the Contracting States: BE CH DE FR GB IT LI NL**

1. A herbicidal composition of extended soil life characterised in that it comprises:

(a) a herbicidally-effective amount of a thiolcarbamate corresponding to the following general formula:

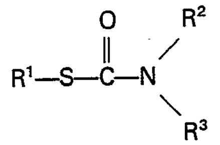

wherein $R^1$, $R^2$ and $R^3$ independently represent $C_2$—$C_4$ alkyl; and

(b) an amount sufficient to extend the soil life of the thiolcarbamate of an amine or an agriculturally-acceptable salt thereof, the amine corresponding to the following general formula:

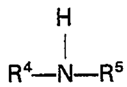

wherein

$R^4$ represents $C_1$—$C_{10}$ alkyl optionally substituted with cyano; $C_3$—$C_6$ alkenyl; $C_1$—$C_{10}$ hydroxyalkyl, phenyl or benzyl optionally substituted with halogen, cyano or methoxy; and

$R^5$ represents $C_3$—$C_6$ alkenyl

provided that, when $R^5$ represents allyl, $R^4$ represents other than *o*-bromobenzyl or α-cyano-*o*-chlorobenzyl.

2. A composition as claimed in claim 1 wherein the amine salt is a hydrohalide salt.

3. A composition as claimed in claim 2 wherein the amine salt is a hydrochloric acid salt.

4. A composition as claimed in any of claims 1 to 3 wherein the thiolcarbamate is S-ethyl N,N-di-*n*-propylthiolcarbamate.

5. A composition as claimed in any of claims 1 to 4 wherein the amine is diallylamine, N-ethyl-N-allylamine, N-propyl-N-allylamine, diallylamine hydrochloride or N-isopentyl-N-allylamine.

6. A composition as claimed in any of claims 1 to 5 wherein the weight ratio of thiolcarbamate to amine or amine salt is from 0.5:1 to 2:1.

7. A composition as claimed in any of claims 1 to 6 characterised in that it further comprises a non-phytotoxic antidotally-effective amount of a compound corresponding to the following general formula:

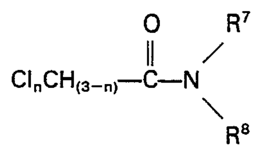

wherein n represents 1 or 2; and $R^7$ and $R^8$ independently represent $C_1$—$C_{12}$ alkyl or $C_2$—$C_{12}$ alkenyl; or the following general formula:

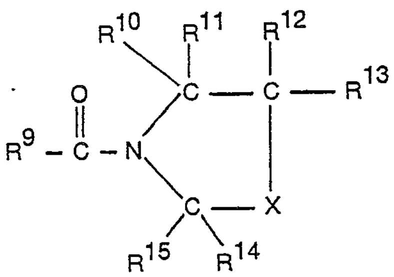

wherein

$R^9$ represents $C_1$—$C_4$ alkyl, $C_1$—$C_4$ haloalkyl or $C_1$—$C_4$ dihaloalkyl;

$R^{10}$, $R^{11}$, $R^{12}$, $R^{13}$, $R^{14}$ and $R^{15}$ independently represent hydrogen or methyl; and

X represents oxygen or sulphur.

8. A composition as claimed in claim 7 wherein the non-phytotoxic antidotally effective amount of compound is of N,N-diallyl dichloroacetamide or 2,2,5-trimethyl-N-dichloroacetyl oxazolidine.

9. A method for controlling undesirable vegetation characterised in that it comprises applying to the locus where the control is desired a composition as claimed in any of claims 1 to 8 or the components thereof.

10. A method for extending the soil life of a thiolcarbamate as defined in claim 1 or claim 4 characterised in that is comprises applying to soil containing the thiolcarbamate or to which the thiolcarbamate is to be applied an effective amount of an amine or an agriculturally-acceptable salt thereof as defined in any of claims 1 to 3 or 5 and, optionally, a non-phytotoxic antidotally-effective amount of a compound as defined in claim 7 or claim 8.

11. A method as claimed in claim 10 wherein the weight ratio of thiolcarbamate to amine or amine salt is from 0.5:1 to 2:1.

**Claims for the Contracting State: AT**

1. A process for the production of a herbicidal composition of extended soil life characterised in that it comprises mixing:

(a) a herbicidally-effective amount of a thiolcarbamate corresponding to the following general formula:

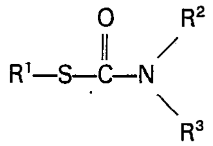

wherein $R^1$, $R^2$ and $R^3$ independently represent $C_2$—$C_4$ alkyl; and

(b) an amount sufficient to extend the soil life of the thiolcarbamate of an amine or an agriculturally-acceptable salt thereof, the amine corresponding to the following general formula:

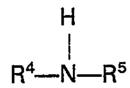

wherein

$R^4$ represents $C_1$—$C_{10}$ alkyl optionally substituted with cyano; $C_3$—$C_6$ alkenyl; $C_1$—$C_{10}$ hydroxyalkyl, phenyl or benzyl optionally substituted with halogen, cyano or methoxy; and

$R^5$ represents $C_3$—$C_6$ alkenyl

provided that, when $R^5$ represents allyl, $R^4$ represents other than *o*-bromobenzyl or α-cyano-*o*-chlorobenzyl.

2. A process as claimed in claim 1 wherein the amine salt is a hydrohalide salt.

3. A process as claimed in claim 2 wherein the amine salt is a hydrochloric acid salt.

4. A process as claimed in any of claims 1 to 3 wherein the thiolcarbamate is S-ethyl N,N-di-*n*-propyl-thiocarbamate.

5. A process as claimed in any of claims 1 to 4 wherein the amine is diallylamine, N-ethyl-N-allylamine, N-propyl-N-allylamine, diallylamine hydrochloride or N-isopentyl-N-allylamine.

6. A process as claimed in any of claims 1 to 5 wherein the weight ratio of thiolcarbamate to amine or amine salt is from 0.5:1 to 2:1.

7. A process as claimed in any of claims 1 to 6 characterised in that it further comprises the mixing of a non-phytotoxic antidotally-effective amount of a compound corresponding to the following general formula:

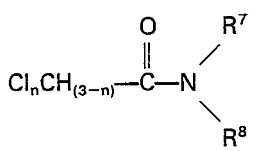

wherein n represents 1 or 2; and $R^7$ and $R^8$ independently represent $C_1$—$C_{12}$ alkyl or $C_2$—$C_{12}$ alkenyl; or the following general formula:

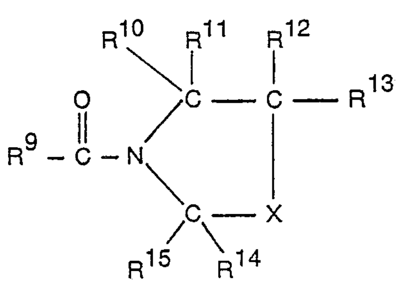

wherein

$R^9$ represents $C_1$—$C_4$ alkyl, $C_1$—$C_4$ haloalkyl or $C_1$—$C_4$ dihaloalkyl;

$R^{10}$, $R^{11}$, $R^{12}$, $R^{13}$, $R^{14}$ and $R^{15}$ independently represent hydrogen or methyl; and

X represents oxygen or sulphur.

8. A process as claimed in claim 7 wherein the non-phytotoxic antidotally effective amount of compound is of N,N-diallyl dichloroacetamide or 2,2,5-trimethyl-N-dichloroacetyl oxazolidine.

9. A method for controlling undesirable vegetation characterised in that it comprises applying to the locus where the control is desired a composition produced by a process as claimed in any of claims 1 to 8 or the components thereof.

10. A method for extending the soil life of a thiolcarbamate as defined in claim 1 or claim 4 characterised in that it comprises applying to soil containing the thiolcarbamate or to which the thiolcarbamate is to be applied an effective amount of an amine or an agriculturally-acceptable salt thereof as defined in any of claims 1 to 3 or 5, and optionally, a non-phytotoxic antidotally-effective amount of a compound as defined in claim 7 or claim 8.

11. A method as claimed in claim 10 wherein the weight ratio of thiolcarbamate to amine or amine salt is from 0.5:1 to 2:1.

12. A herbicidal composition of extended soil life characterised in that it comprises:

(a) a herbicidally-effective amount of a thiolcarbamate corresponding to the following general formula:

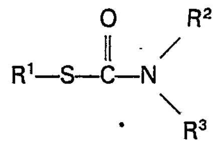

wherein $R^1$, $R^2$ and $R^3$ independently represent $C_2$—$C_4$ alkyl; and

(b) an amount sufficient to extend the soil life of the thiolcarbamate of an amine or an agriculturally-acceptable salt thereof, the amine corresponding to the following general formula:

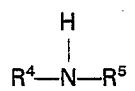

wherein

$R^4$ represents $C_1$—$C_{10}$ alkyl optionally substituted with cyano; $C_3$—$C_6$ alkenyl; $C_1$—$C_{10}$ hydroxyalkyl, phenyl or benzyl optionally substituted with halogen, cyano or methoxy; and

$R^5$ represents $C_3$—$C_6$ alkenyl;

provided that, when $R^5$ represents allyl, $R^4$ represents other than *o*-bromobenzyl or α-cyano-*o*-chlorobenzyl.

13. A composition as claimed in claim 12 characterised in that it further comprises a non-phytotoxic antidotally-effective amount of a compound corresponding to the following general formula:

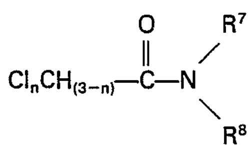

wherein n represents 1 or 2; and $R^7$ and $R^8$ independently represent $C_1$—$C_{12}$ alkyl or $C_2$—$C_{12}$ alkenyl; or the following general formula:

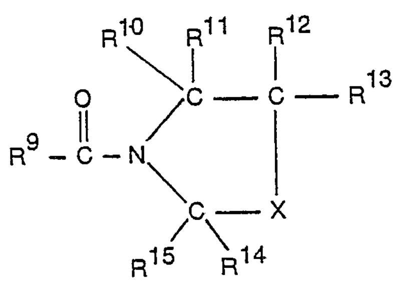

wherein

$R^9$ represents $C_1$—$C_4$ alkyl, $C_1$—$C_4$ haloalkyl or $C_1$—$C_4$ dihaloalkyl;

$R^{10}$, $R^{11}$, $R^{12}$, $R^{13}$, $R^{14}$ and $R^{15}$ independently represent hydrogen or methyl; and

X represents oxygen or sulphur.

**Patentansprüche für die Vertragsstaaten: BE CH DE FR GB IT LI NL**

1. Herbizides Gemisch mit verlängerter Lebensdauer im Boden, dadurch gekennzeichnet, daß (a) es ein Thiolcarbamat in herbizid wirksamer Menge mit der folgenden allgemeinen Formel

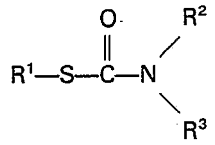

in der $R^1$, $R^2$ und $R^3$ unabhängig voneinander, $C_2$—$C_4$ Alkyl sind, und

(b) ein Amin oder landwirtschaftlich verträgliches Salz des Amins in zur Verlängerung der Lebensdauer des Thiolcarbamates im Boden ausreichenden Menge mit der folgenden allgemeinen Formel

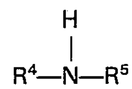

in der

$R^4$ $C_1$—$C_{10}$ Alkyl, das durch einen Cyanrest substituiert sein kann, $C_3$—$C_6$ Alkenyl, $C_1$—$C_{10}$ Hydroxyalkyl, Phenyl oder Benzyl, das Halogen-, Cyan-, oder Methoxysubstituenden enthalten kann, ist und

$R^5$ $C_3$—$C_6$ Alkenyl ist,

unter der Voraussetzung, daß wenn $R^5$ Allyl ist, $R^4$ ein anderer Rest als o-Brombenzyl oder α-Cyan-o-chlorbenzyl ist, enthält.

2. Gemisch nach Anspruch 1, dadurch gekennzeichnet, daß das Ammoniumsalz ein Halogenwasserstoffsalz ist.

3. Gemisch nach Anspruch 2, dadurch gekennzeichnet, daß das Ammoniumsalz ein Hydrochlorid ist.

4. Gemisch nach einem der Ansprüche 1 bis 3, dadurch gekennzeichnet, daß das Thiolcarbamat S-Ethyl-N,N-di-n-propylthiolcarbamat ist.

5. Gemisch nach einem der Ansprüche 1 bis 4, dadurch gekennzeichnet, daß das Amin Diallylamin, N-Ethyl-N-allylamin, N-Propyl-N-Allylamin, Diallylaminhydrochlorid oder N-Isopentyl-N-allylamin ist.

6. Gemisch nach einem der Ansprüche 1 bis 5, dadurch gekennzeichnet, daß das Gewichtsverhältnis von Thiolcarbamat zu Amin oder Ammoniumsalz 0,5:1 bis 2:1 beträgt.

7. Gemisch nach einem der Ansprüche 1 bis 6, dadurch gekennzeichnet, daß es ein Gegenmittel in einer für die Pflanze ungiftigen, jedoch wirksamen Menge mit der folgenden allgemeinen Formel

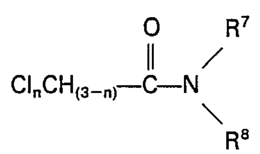

in der n 1 oder 2 und $R^7$ und $R^8$ unabhängig voneinander $C_1$—$C_{12}$ Alkyl oder $C_2$—$C_{12}$ Alkenyl sind, oder mit der folgenden allgemeinen Formel

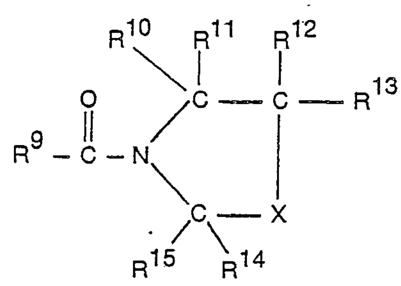

in der

$R^9$ $C_1$—$C_4$ Alkyl, $C_1$—$C_4$ Halogenalkyl oder $C_1$—$C_4$ Dihalogenalkyl,

$R^{10}$, $R^{11}$, $R^{12}$, $R^{13}$, $R^{14}$ und $R^{15}$ unabhängig voneinander Wasserstoff oder Methyl, und

X Sauerstoff oder Schwefel sind,

enthält.

8. Gemisch nach Anspruch 7, dadurch gekennzeichnet, daß die für die Pflanze nicht giftige, jedoch wirksame Menge des Gegenmittels von der Verbindung N,N-Diallyldichloracetamid oder 2,2,5-Trimethyl-N-dichloracetyloxazolidin geliefert wird.

9. Verfahren zur Kontrolle unerwünschter Vegetation, dadurch gekennzeichnet, daß am Ort, an dem Kontrolle verlangt wird, ein Gemisch nach einem der Ansprüche 1 bis 8, oder dessen Komponenten zur Anwendung kommen.

10. Verfahren zur Verlängerung der Lebensdauer eines Thiolcarbamates nach einem der Ansprüche 1 oder 4 im Boden, dadurch gekennzeichnet, daß dem Boden, der das Thiolcarbamat enthält oder auf den das Thiolcarbamat aufgebracht werden soll, eine wirksame Menge eines Amins oder dessen landwirtschaftlich vertägliches Ammoniumsalz nach einem der Ansprüche 1 bis 3 oder 5 und möglicherweise eine Verbindung, wie sie in Anspruch 7 oder 8 definiert ist, in für die Pflanze nicht giftiger, jedoch als Gegenmittel wirksamer Menge zugesetzt wird.

11. Verfahren nach Anspruch 10, dadurch gekennzeichnet, daß das Gewichtsverhältnis von Thiolcarbamat zu Amin oder Ammoniumsalz 0,5:1 bis 2:1 beträgt.

**Patentansprüche für den Vertragsstaat: AT**

1. Verfahren zur Herstellung eines herbiziden Gemisches mit verlängerter Lebensdauer im Boden, dadurch gekennzeichnet, daß

(a) ein Thiolcarbamat in herbizid wirksamer Menge mit der folgenden allgemeinen Formel

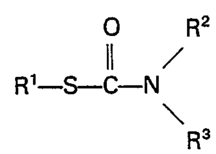

in der $R^1$, $R^2$ und $R^3$ unabhängig voneinander, $C_2$—$C_4$ Alkyl sind, und

(b) ein Amin oder landwirtschaftlich verträgliches Salz des Amins in zur Verlängerung der Lebensdauer des Thiolcarbamates im Boden ausreichenden Menge mit der folgenden allgemeinen Formel

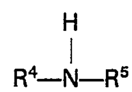

in der

$R^4$ $C_1$—$C_{10}$ Alkyl, das durch einen Cyanrest substituiert sein kann, $C_3$—$C_6$ Alkenyl, $C_1$—$C_{10}$ Hydroxyalkyl, Phenyl oder Benzyl, das Halogen-, Cyan-, oder Methoxysubstituenten enthalten kann, ist und

$R^5$ $C_3$—$C_6$ Alkenyl ist,

unter der Voraussetzung, daß wenn $R^5$ Allyl ist, $R^4$ ein anderer Rest als o-Brombenzyl oder α-Cyan-o-chlorbenzyl ist, miteinander gemischt werden.

2. Verfahren nach Anspruch 1, dadurch gekennzeichnet, daß das Ammoniumsalz ein Halogenwasserstoffsalz ist.

3. Verfahren nach Anspruch 2, dadurch gekennzeichnet, daß das Ammoniumsalz ein Hydrochlorid ist.

4. Verfahren nach einem der Ansprüche 1 bis 3, dadurch gekennzeichnet, daß das Thiolcarbamat S-Ethyl-N,N-di-n-propylthiolcarbamat ist.

5. Verfahren nach einem der Ansprüche 1 bis 4, dadurch gekennzeichnet, daß das Amin Diallylamin, N-Ethyl-N-allylamin, N-Propyl-N-allylamin, Diallylaminhydrochlorid oder N-Isopentyl-N-allylamin ist.

6. Verfahren nach einem der Ansprüche 1 bis 5, dadurch gekennzeichnet, daß das Gewichtsverhältnis von Tiolcarbamat zu Amin oder Ammoniumsalz 0,5:1 bis 2:1 beträgt.

7. Verfahren nach einem der Ansprüche 1 bis 6, dadurch gekennzeichnet, daß zusätzlich eine gegenüber der Pflanze nicht giftig wirkende, jedoch als Gegenmittel wirksame Menge einer Verbindung mit der folgenden allgemeinen Formel

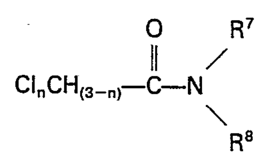

in der n 1 oder 2 und $R^7$ und $R^8$ unabhängig voneinander $C_1$—$C_{12}$ Alkyl oder $C_2$—$C_{12}$ Alkenyl sind, oder mit der folgenden allgemeinen Formel

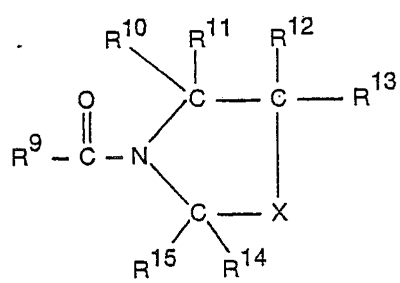

in der

$R^9$ $C_1$—$C_4$ Alkyl, $C_1$—$C_4$ Halogenalkyl oder $C_1$—$C_4$ Dihalogenalkyl,
$R^{10}$, $R^{11}$, $R^{12}$, $R^{13}$, $R^{14}$ und $R^{15}$ unabhängig voneinander Wasserstoff oder Methyl, und
X Sauerstoff oder Schwefel sind,
zugemischt wird.

8. Verfahren nach Anspruch 7, dadurch gekennzeichnet, daß die für die Pflanze nicht giftige, jedoch als Gegenmittel wirksame Menge der Verbindung N-N-Diallyldichloracetamid oder 2,2,5-Trimethyl-N-dichloracetyloxazolidin ist.

9. Verfahren zur Kontrolle unerwünschter Vegetation dadurch gekennzeichnet, daß an dem Ort, an dem Kontrolle gewünscht wird, ein Gemisch, erhältlich nach einem Verfahren der Ansprüche 1 bis 8 oder dessen Komponenten angewandt wird.

10. Verfahren zur Verlängerung der Lebensdauer eines Thiolcarbamates nach einem der Ansprüche 1 oder 4 im Boden, dadurch gekennzeichnet, daß dem Boden, der das Thiolcarbamat enthält oder auf den das Thiolcarbamat aufgebracht werden soll, eine wirksame Menge eines Amins oder dessen landwirtschaftlich vertägliches Ammoniumsalz nach einem der Ansprüche 1 bis 3 oder 5 und möglicherweise eine Verbindung, wie sie in Anspruch 7 oder 8 definiert ist, in für die Pflanze nicht giftiger, jedoch als Gegenmittel wirksamer Menge zugesetzt wird.

11. Verfahren nach Anspruch 10, dadurch gekennzeichnet, daß das Gewichtsverhältnis von Thiolcarbamat zu Amin oder Ammoniumsalz 0,5:1 bis 2:1 beträgt.

12. Herbizides Gemisch mit verlängerter Lebensdauer im Boden, dadurch gekennzeichnet, daß
(a) es ein Thiolcarbamat in herbizid wirksamer Menge mit der folgenden allgemeinen Formel

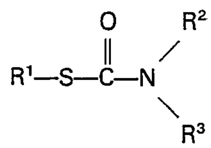

in der $R^1$, $R^2$ und $R^3$ unabhängig voneinander, $C_2$—$C_4$ Alkyl sind, und
(b) ein Amin oder landwirtschaftlich verträgliches Salz des Amins in zur Verlängerung der Lebensdauer des Thiolcarbamates im Boden ausreichenden Menge mit der folgenden allgemeinen Formel

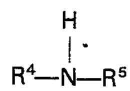

in der
$R^4$ $C_1$—$C_{10}$ Alkyl, das durch einen Cyanrest substituiert sein kann, $C_3$—$C_6$ Alkenyl, $C_1$—$C_{10}$ Hydroxyalkyl, Phenyl oder Benzyl, das Halogen-, Cyan-, oder Methoxysubstituenden enthalten kann, ist und
$R^5$ $C_3$—$C_6$ Alkenyl ist,
unter der Voraussetzung, daß wenn $R^5$ Allyl ist, $R^4$ ein anderer Rest als o-Brombenzyl oder α-Cyan-o-chlorbenzyl ist, enthält.

13. Gemisch nach Anspruch 12, dadurch gekennzeichnet, daß es ein Gegenmittel in einer für die Pflanze ungiftigen, jedoch wirksamen Menge mit der folgenden allgemeinen Formel

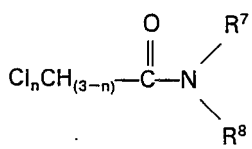

in der n 1 oder 2 und $R^7$ und $R^8$ unabhängig voneinander $C_1$—$C_{12}$ Alkyl oder $C_2$—$C_{12}$ Alkenyl sind, oder mit der folgenden allgemeinen Formel

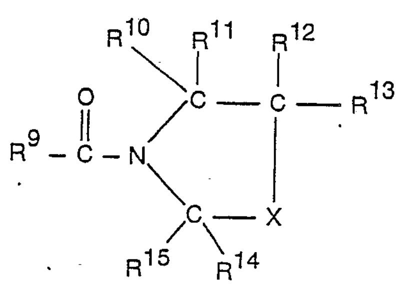

in der
$R^9$ $C_1$—$C_4$ Alkyl, $C_1$—$C_4$ Halogenalkyl oder $C_1$—$C_4$ Dihalogenalkyl,

$R^{10}$, $R^{11}$, $R^{12}$, $R^{13}$, $R^{14}$ und $R^{15}$ unabhängig voneinander Wasserstoff oder Methyl, und
X Sauerstoff oder Schwefel sind,
enthält.

**Revendications pour les Etats contractants: BE CH DE FR GB IT LI NL**

1. Une composition herbicide à durée de vie augmentée dans le sol, caractérisée en ce qu'elle comprend:

(a) une quantité efficace du point de vue herbicide d'un thiolcarbamate correspondant à la formule générale:

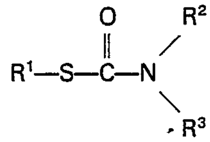

dans laquelle $R^1$, $R^2$ et $R^3$ indépendamment l'un de l'autre, présentent un radical alkyle en $C_2$ à $C_4$; et

(b) une quantité suffisante pour améliorer la durée de vie dans le sol du thiolcarbamate d'une amine ou d'un sel acceptable du point de vue agricole en dérivant, cette amine correspondant à la formule générale suivante:

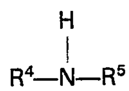

dans laquelle:

$R^4$ représente un radical alkyle en $C_1$ à $C_{10}$ éventuellement substitué par un groupe cyano; alkényle en $C_3$ à $C_6$, hydroxyalkyle en $C_1$ à $C_{10}$, phényle ou benzyle éventuellement substitué par un halogène ou un groupe cyano ou méthoxy; et

$R^5$ représente un alkényle en $C_3$ à $C_6$;

étant entendu que lorsque $R^5$ représente un radical allyle, $R^4$ représente un radical autre qu'un radical o-bromobenzyle ou α-cyano-o-chlorobenzyle.

2. Une composition ainsi que revendiquée dans la revendication 1, dans laquelle le sel d'amine est un halohydrate.

3. Une composition ainsi que revendiquée dans la revendication 2, dans laquelle le sel d'amine est un chlorhydrate.

4. Une composition ainsi que revendiquée dans l'une quelconque des revendications 1 à 3, dans laquelle le thiolcarbamate est le S-éthyl-N,N-di-n-propylthiolcarbamate.

5. Une composition ainsi que revendiquée dans l'une quelconque des revendications 1 à 4, dans laquelle l'amine est le diallylamine, la N-éthyl-N-allylamine, la N-propyl-N-allylamine, le chlorhydrate de diallylamine ou la N-isopentyl-N-allylamine.

6. Une composition ainsi que revendiquée dans l'une quelconque des revendications 1 à 5, dans laquelle le rapport pondéral thiolcarbamate/amine ou sel d'amine est de 0,5/1 à 2/1.

7. Une composition ainsi que revendiquée dans l'une quelconque des revendications 1 à 6, caractérisée en ce qu'elle comprend en outre une quantité efficace du point de vue antidote et non phytotoxique d'un composé correspondant à la formule générale suivante:

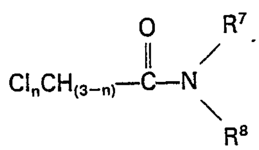

dans laquelle:

n représente 1 ou 2; et

$R^7$ et $R^8$ indépendamment représentent un radical alkyle en $C_1$ à $C_{12}$ ou alkényle en $C_2$ à $C_{12}$;

ou présentant la formule générale suivante:

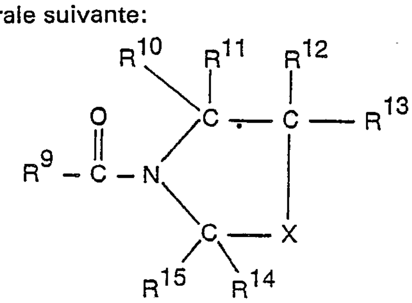

dans laquelle:

$R^9$ représente un radical alkyle en $C_1$ à $C_4$, haloalkyle en $C_1$ à $C_4$ ou dihaloalkyle en $C_1$ à $C_4$;

$R^{10}$, $R^{11}$, $R^{12}$, $R^{13}$, $R^{14}$ et $R^{15}$ indépendamment l'un de l'autre représentent de l'hydrogène ou un radical méthyle; et

X représente de l'oxygène ou du soufre.

8. Une composition ainsi que revendiquée dans la revendication 7, dans laquelle la quantité efficace du point de vue antidote et non phytotoxique du composé consiste en N-N-diallyl-dichloroacétamide ou 2,2,5-triméthyl-N-dichloroacétyl-oxazolidine.

9. Un procédé pour contrôler la végétation indésirable, caractérisé en ce qu'il consiste à appliquer au lieu où le contrôle est recherché une composition ainsi que revendiquée dans l'une quelconque des revendications 1 à 8 ou ses constituants.

10. Un procédé pour augmenter la durée de vie dans le sol d'un thiolcarbamate ainsi que définie dans la revendication 1 ou dans la revendication 4, caractérisée en qu'il consiste à appliquer au sol contenant le thiolcarbamate ou auquel le thiolcarbamate est destiné à être appliqué, une quantité efficace d'une amine ou d'un sel acceptable du point de vue agricole en dérivant, telle que définie dans l'une quelconque des revendications 1 à 3 ou 5 et, éventuellement, une quantité efficace du point de vue antidote et non phytotoxique d'un composé ainsi que défini dans la revendication 7 ou dans la revendication 8.

11. Un procédé ainsi que revendiqué dans la revendication 10, dans lequel le rapport pondéral thiolcarbamate/amine ou sel d'amine est de 0,5/1 à 2/1.

**Revendications pour l'Etat contractant: AT**

1. Procédé pour la production d'une composition herbicide à durée de vie augmentée dans le sol, caractérisé en ce qu'il consiste à mélanger:

(a) une quantité efficace du point de vue herbicide d'un thiolcarbamate correspondant à la formule générale:

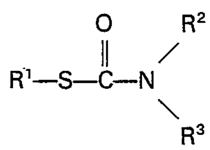

dans laquelle $R^1$, $R^2$ et $R^3$ indépendamment l'un de l'autre, présentent un radical alkyle en $C_2$ à $C_4$; et

(b) une quantité suffisante pour améliorer la durée de vie dans le sol du thiolcarbamate d'une amine ou d'un sels acceptables du point de vue agricole en dérivant, cette amine correspondant à la formule générale suivante:

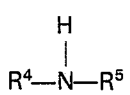

dans laquelle:

$R^4$ représente un radical alkyle en $C_1$ à $C_{10}$ éventuellement substitué par un groupe cyano; alkényle en $C_3$ à $C_6$, hydroxyalkyle en $C_1$ à $C_{10}$, phényle ou benzyle éventuellement substitué par un halogène ou un groupe cyano ou méthoxy; et

$R^5$ représente un alkényle en $C_3$ à $C_6$;

étant entendu que lorsque $R^5$ représente un radical allyle, $R^4$ représente un radical autre qu'un radical o-bromobenzyle ou α-cyano-o-chlorobenzyle.

2. Un procédé ainsi que revendiqué dans la revendication 1, dans lequel le sel d'amine est un halohydrate.

3. Un procédé ainsi que revendiqué dans la revendication 2, dans lequel le sel d'amine est un chlorhydrate.

4. Un procédé ainsi que revendiqué dans l'une quelconque des revendications 1 à 3, dans lequel le thiolcarbamate est le S-éthyl-N,N-di-n-propylthiolcarbamate.

5. Un procédé ainsi que revendiqué dans l'une quelconque des revendications 1 à 4, dans lequel l'amine est la diallylamine, la N-éthyl-N-allylamine, la N-propyl-N-allylamine, le chlorhydrate de diallylamine ou la N-isopentyl-N-allylamine.

6. Un procédé ainsi que revendiqué dans l'une quelconque des revendications 1 à 5, dans lequel le rapport pondéral thiolcarbamate/amine ou sel d'amine est de 0,5/1 à 2/1.

7. Un procédé ainsi que revendiqué dans l'une quelconque des revendications 1 à 6, caractérisé en ce qu'il comprend en outre une quantité efficace du point de vue antidote et non phytotoxique d'un composé correspondant à la formule générale suivante:

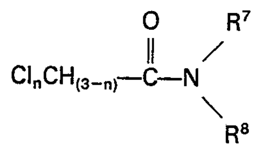

dans laquelle:

n représente 1 ou 2; et

$R^7$ et $R^8$ indépendamment représentent un radical alkyle en $C_1$ à $C_{12}$ ou alkényle en $C_2$ à $C_{12}$; ou présentant la formule générale suivante:

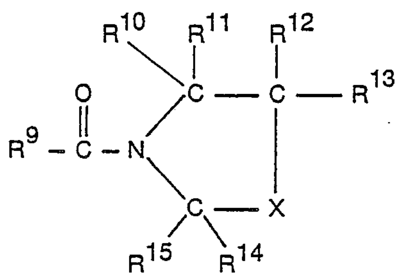

dans laquelle:

$R^9$ représente un radical alkyle en $C_1$ à $C_4$, haloalkyle en $C_1$ à $C_4$ ou dihaloalkyle en $C_1$ à $C_4$;

$R^{10}$, $R^{11}$, $R^{12}$, $R^{13}$, $R^{14}$ et $R^{15}$ indépendamment l'un de l'autre représentent de l'hydrogène ou un radical méthyle; et

X représente de l'oxygène ou du soufre.

8. Un procédé ainsi que revendiqué dans la revendication 7, dans lequel la quantité efficace du point de vue antidote et non phytotoxique du composé consiste en N-N-diallyl-dichloroacétamide ou 2,2,5-triméthyl-N-dichloroacétyl-oxazolidine.

9. Un procédé pour contrôler la végétation indésirable, caractérisé en ce qu'il consiste à appliquer au lieu où le contrôle est recherché une composition ainsi que revendiquée dans l'une quelconque des revendications 1 à 8 ou leurs constituants.

10. Un procédé pour augmenter la durée de vie dans le sol d'un thiolcarbamate ainsi que définie dans la revendication 1 ou dans la revendication 4, caractérisée en qu'il consiste à appliquer au sol contenant le thiolcarbamate ou auquel le thiolcarbamate est destiné à être appliqué, une quantité efficace d'une amine ou d'un sel acceptable du point de vue agricole en dérivant, telle que définie dans l'une quelconque des revendications 1 à 3 ou 5 et, éventuellement, une quantité efficace du point de vue antidote et non phytotoxique d'un composé ainsi que défini dans la revendication 7 ou dans la revendication 8.

11. Un procédé ainsi que revendiqué dans la revendication 10, dans lequel le rapport pondéral thiolcarbamate/amine ou sel d'amine est de 0,5/1 à 2/1.

12. Une composition herbicide présentant une durée de vie améliorée dans le sol, caractérisée en ce qu'elle comprend:

(a) une quantité efficace du point de vue herbicide d'un thiolcarbamate correspondant à la formule générale:

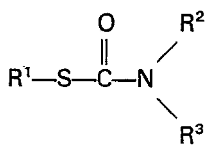

dans laquelle $R^1$, $R^2$ et $R^3$ indépendamment l'un de l'autre, présentent un radical alkyle en $C_2$ à $C_4$; et

(b) une quantité suffisante pour améliorer la durée de vie dans le sol du thiolcarbamate d'une amine ou d'un sels acceptables du point de vue agricole en dérivant, cette amine correspondant à la formule générale suivante:

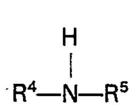

dans laquelle:

$R^4$ représente un radical alkyle en $C_1$ à $C_{10}$ éventuellement substitué par un groupe cyano; alkényle en $C_3$ à $C_6$, hydroxyalkyle en $C_1$ à $C_{10}$, phényle ou benzyle éventuellement substitué par un halogène ou un groupe cyano ou méthoxy; et

$R^5$ représente un alkényle en $C_3$ à $C_6$;
étant entendu que lorsque $R^5$ représente un radical allyle, $R^4$ représente un radical autre qu'un radical o-bromobenzyle ou α-cyano-o-chlorobenzyle.

13. Une composition ainsi que revendiquée dans la revendication 12, caractérisée en ce qu'elle comprend en outre une quantité efficace du point de vue antidote et non phytotoxique d'un composé correspondant à la formule générale suivante:

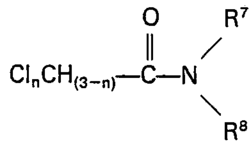

dans laquelle:

n représente 1 ou 2; et

$R^7$ et $R^8$ indépendamment représentent un radical alkyle en $C_1$ à $C_{12}$ ou alkényle en $C_2$ à $C_{12}$;

ou présentant la formule générale suivante:

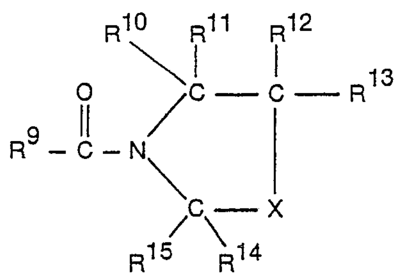

dans laquelle:

$R^9$ représente un radical alkyle en $C_1$ à $C_4$, haloalkyle en $C_1$ à $C_4$ ou dihaloalkyle en $C_1$ à $C_4$;

$R^{10}$, $R^{11}$, $R^{12}$, $R^{13}$, $R^{14}$ et $R^{15}$ indépendamment l'un de l'autre représentent de l'hydrogène ou un radical méthyle; et

X représente de l'oxygène ou du soufre.